# EUROPÄISCHE PATENTSCHRIFT

(11) **EP 4 186 346 B1**
(45) Veröffentlichungstag und Bekanntmachung des Hinweises auf die Patenterteilung: **09.07.2025**
(21) Anmeldenummer: 22209950.9
(22) Anmeldetag: 28.11.2022
(51) Int. Cl.: A01D 34/44, A01D 34/835, A01D 34/00, A01B 29/04

(54) **ANBAUGERÄT FÜR DEN LANDWIRTSCHAFTLICHEN EINSATZ ZUM ZERSCHNEIDEN VON PFLANZENMATERIAL**
AGRICULTURAL IMPLEMENT FOR CUTTING VEGETATION
ACCESSOIRE POUR L'UTILISATION AGRICOLE POUR COUPER DES MATIÈRES VÉGÉTALES

(30) Priorität: 29.11.2021 DE 202020110649 U
(43) Veröffentlichungstag der Anmeldung: 31.05.2023
(73) Patentinhaber: Maschinenbau Lewe GmbH, 48653 Coesfeld (DE)
(72) Erfinder: Lewe, Hubert, 48249 Dülmen (DE)
(74) Vertreter: BSB Patentanwälte Schütte & Engelen Partnerschaft mbB

(56) Entgegenhaltungen:
- DE-U1- 202019 004 580
- RU-C1- 2 752 886
- US-A1- 2007 125 561
- US-A1- 2016 014 951

## Beschreibung

Die vorliegende Erfindung betrifft ein Anbaugerät für den landwirtschaftlichen Einsatz zum Zerschneiden von Pflanzenmaterial. Das Anbaugerät umfasst ein Traggestell und eine Schneidvorrichtung mit wenigstens zwei hintereinander am Traggestell angeordneten Messerwalzenreihen.

Im Ackerbau werden bestimmte Anbaugeräte dazu eingesetzt, um die Überreste abgeernteter Pflanzen oder auch um Pflanzen, die zur Unkrautbekämpfung oder Nährstoffanreicherung angebaut wurden, zu zerkleinern. Eine besondere Bedeutung kommt der Zerkleinerung von Maisstoppeln zu, weil diese zur pestizidfreien Bekämpfung des Maiszünslers dient. Dabei ist es entscheidend, dass möglichst viele Maisstoppeln möglichst weitgehend zerkleinert werden.

In der Regel werden dazu Mulcher mit aktiv rotierenden Schlegeln oder Messern eingesetzt. Diese benötigen jedoch sehr leistungsstarke Zugmaschinen bzw. Schlepper.

Aus wirtschaftlicher und auch aus ökologischer Sicht sind daher Anbaugeräte entwickelt worden, deren Schneidvorrichtungen passiv durch die Vorwärtsbewegung des Schleppers angetrieben werden. Dazu sind z. B. Messerräder mit Tragscheiben vorgesehen, an denen die Messer zu wenigstens einer axialen Seite der Tragscheibe überstehen.

Beispielsweise ist aus der DE 10 2015 004 212 A1 eine Walzeneinheit für ein landwirtschaftliches Arbeitsgerät mit einer Vielzahl von ringförmigen Schneidscheiben zum Zerschneiden der Maisstoppel bekannt geworden.

Aus der IT 2019 00 012 873 A1 ist ein landwirtschaftliches Anbaugerät zur Pflanzenzerkleinerung mit einer zylindrischen Walze und daran angeordneten Klingen bekannt. Die Klingen sind umlaufend um die Walze angeordnet und verlaufen schräg zu deren Drehachse.

Die DE 20 2019 004 580 U1 zeigt ein Bodenbearbeitungsgerät zum Ausreißen und Zerkleinern von Pflanzen und Pflanzenteilen mit Flachgrubbern, Säbelscheiben, Messerwalzen und einer Rohrstabwalze. Die Messerwalzen sind mit Messern ausgestattet, welche über deren Umfang verteilt und mit schräg zur Drehachse der Messerwalze angeordnet sind.

Aus der US 10 506 753 B1 ist ein Stachelwalzenmodul zum Lockern und Aufbrechen des Oberbodens für ein Anbaugerät zur streifenförmigen Saatbett- bzw. Bodenbearbeitung (strip tillage) bekannt. Das Stachelwalzenmodul umfasst vier drehbare Stachelscheiben, wobei jeweils zwei Stachelscheiben drehfest miteinander gekoppelt sind und eine Stachelscheibeneinheit bilden. Die Drehachsen der Stachelscheibeneinheiten sind rechtwinkelig zur Arbeitsrichtung und schräg zur Waagerechten bzw. Hauptebene des einsatzbereiten Anbaugeräts angeordnet. Die Stachelscheiben sind zwischen zwei Rädern angeordnet, welche als einstellbarer Tiefenanschlag dienen. Die Stachelwalzen jeweils eines Moduls sind an einem Arm angebunden, welcher schwenkbar und gedämpft an einer Montageplatte gelagert ist. Die Montageplatte wird mittels U-förmigen Bügeln an einem Rahmen des Anbaugeräts befestigt. Das gezielte Zerschneiden von Pflanzenmaterial ist mit solchen Stachelwalzen jedoch nicht umsetzbar.

Die DE 1 215 982 A zeigt ein Anbaugerät zur Bodenbearbeitung (Krümler) mit Stachelwalzenmodulen, welche verschiebbar an einem Grundrahmen befestigt sind. Dadurch kann eine Anpassung auf die Abstände der Pflanzenreihen erfolgen. Die einzelnen Stachelscheiben sind drehbar an Haltearmen gelagert, wobei die Haltearme abwechselnd nach vorn und hinten an einem Schwenkbalken befestigt sind. Mittels U-förmiger Schraubenbefestigungen können die Schwingarme quer zur Arbeitsrichtung an dem Grundrahmen verschoben werden. Für das gezielte Zerschneiden von Pflanzenmaterial sind die Stachelwalzen nicht geeignet.

Ein gattungsgemäßes Anbaugerät ist aus der US 2016/014951 A1 bekannt.

Demgegenüber ist es die Aufgabe der vorliegenden Erfindung, ein Anbaugerät mit einer verbesserten Schneidvorrichtung zur Verfügung zu stellen. Insbesondere soll eine möglichst weitgehende Zerkleinerung auch von Maisstoppeln möglich sein. Zugleich soll die Zerkleinerung auch auf schweren oder nassen Böden zuverlässig möglich sein.

Diese Aufgabe wird durch ein Anbaugerät mit den Merkmalen des Anspruchs 1 gelöst. Bevorzugte Weiterbildungen der Erfindung sind Gegenstand der Unteransprüche. Weitere Vorteile und Merkmale der vorliegenden Erfindung ergeben sich aus der allgemeinen Beschreibung und der Beschreibung der Ausführungsbeispiele.

Das erfindungsgemäße Anbaugerät ist für den landwirtschaftlichen Einsatz zum Zerschneiden bzw. zur Zerkleinerung von Pflanzenmaterial und insbesondere Maisstoppeln vorgesehen. Vorzugsweise wird das Anbaugerät zum Zerschneiden von Pflanzenmaterial verwendet. Das Anbaugerät umfasst ein Traggestell und eine Schneidvorrichtung mit wenigstens zwei hintereinander am Traggestell angeordneten Messerwalzenreihen. Die Messerwalzenreihen umfassen jeweils Messerwalzenmodule mit drehbaren Messerrädern. Die Messerräder umfassen jeweils mehrere Messer. Die Messer weisen jeweils wenigstens eine Schneide auf. Die Messerräder weisen jeweils wenigstens eine Tragscheibe auf. An der Tragscheibe sind die Messer derart angeordnet, dass sie wenigstens teilweise (vorzugsweise wenigstens ihre Schneiden) zu wenigstens einer axialen Seite der Tragscheibe (vorzugsweise zu beiden axialen Seiten der Tragscheibe) überstehen. Die Messerwalzenmodule umfassen jeweils wenigstens eine und vorzugsweise nur eine Anbindungseinrichtung zur (unmittelbaren oder mittelbaren) Anbindung am Traggestell. Dabei stehen die Drehachsen der Messerräder schräg zur (bestimmungsgemäßen) Arbeitsrichtung des Anbaugeräts. Insbesondere stehen die Drehachsen der Messerräder schräg zur Längsachse und/oder zur Querachse des Anbaugeräts. Insbesondere stehen die Drehachsen der Messerräder rechtwinkelig zur Hochachse des Anbaugeräts und/oder parallel zur Waagerechten bzw. zur Hauptebene des Anbaugeräts. Dabei weisen die Messerwalzenmodule jeweils wenigstens zwei unabhängig voneinander um eine gemeinsame Drehachse drehbare Messerradeinheiten auf. Die Messerradeinheiten weisen jeweils wenigstens zwei drehfest miteinander gekoppelte Messerräder auf. Dabei sind die Schneiden parallel zur Drehachse wenigstens ihres Messerrads ausgerichtet. Ein erfindungsgemäßes Anbaugerät kann vorzugsweise auch dadurch gekennzeichnet sein, dass die Messerwalzenmodule jeweils wenigstens vier um eine gemeinsame Drehachse drehbare Messerräder aufweisen, wobei von den wenigstens vier Messerrädern jeweils wenigstens zwei Messerräder drehfest miteinander gekoppelt sind und zusammen eine Messerradeinheit bereitstellen und wobei jeweils wenigstens zwei Messerräder unabhängig voneinander drehbar sind und wobei die wenigstens zwei unabhängig voneinander drehbaren Messerräder zu unterschiedlichen Messerradeinheiten gehören.

Die vorliegende Erfindung bietet viele Vorteile. Einen erheblichen Vorteil bieten die Messerwalzenmodule mit ihren schräg gestellten Drehachsen und ihren Messerradeinheiten. Es hat sich gezeigt, dass schräg gestellte Drehachsen eine erheblich bessere Schneidwirkung als Messerwalzen mit schrägen Messern und rechtwinklig zur Arbeitsrichtung verlaufenden Drehachsen ermöglichen. Bei Letzteren kann beobachtet werden, dass die Messerwalzen Abdrücke ihrer schräg verlaufenden Messer in den Boden prägen. Bei der Erfindung hingegen üben die Messer eine massive Scherwirkung auf das Pflanzenmaterial aus, sodass dieses nicht nur geschnitten, sondern zusammen mit dem Boden zerrissen und verwirbelt wird. Das wirkt sich günstig auf die Schädlingsbekämpfung und die Verrottung des Pflanzenmaterials im Boden aus. Einen erheblichen Vorteil bietet auch der besondere Aufbau der Messerwalzenmodule mit drehbaren Messerradeinheiten mit drehfesten Messerrädern. Dadurch setzen sich Messerwalzenreihen auch auf schweren bzw. bindigen oder nassen Böden nicht oder nur unwesentlich zu oder können sich selbst reinigen. Zudem kann die Schneidvorrichtung auch bei relativ hohen Arbeitsgeschwindigkeiten von z. b. 15 km/h eingesetzt werden. Ein weiterer Vorteil ist, dass die modulare Schneidvorrichtung konstruktiv unaufwendig umsetzbar ist und daher sowohl bei der Herstellung als auch bei der Wartung sehr wirtschaftlich ist. Zudem bietet das Anbaugerät insgesamt sehr kompakte Abmessungen.

Erfindungsgemäß weisen die Messer jeweils wenigstens eine Schneide auf. Erfindungsgemäß sind die Schneiden (in Bezug auf ihre Längsachse) parallel zur Drehachse wenigstens ihres Messerrads und vorzugsweise parallel zur Drehachse des Messerwalzenmoduls ausgerichtet. Insbesondere sind die Schneiden parallel zu einer Achseinheit des zugehörigen Messerwalzenmoduls ausgerichtet. Derart ausgerichtete Messer bieten in Kombination mit den schräg stehenden Drehachsen eine besonders hohe Schneidwirkung und eine Verwirbelung des Schnittguts sowie eine gute Selbstreinigung. Vorzugsweise sind die Schneiden nach radial außen ausgerichtet. Insbesondere sind die zu einem Messerrad gehörenden Messer (allesamt) parallel zueinander angeordnet. Insbesondere sind die Messer in Bezug auf ihre Hauptebene parallel zur Drehachse ausgerichtet.

Die Messerräder weisen jeweils wenigstens eine Tragscheibe auf. Die Messer sind an der Tragscheibe angeordnet. Insbesondere sind die Schneiden rechtwinklig zur Hauptebene der Tragscheibe ausgerichtet. Insbesondere sind die Messer und/oder die Tragscheiben als Gleichteile ausgebildet. Insbesondere weisen die Tragscheiben sternartige Fortsätze auf, an denen die Messer befestigt sind. Insbesondere verläuft eine Hauptebene der Tragscheibe quer zur Drehachse ihres Messerrads. Vorzugsweise sind die Messer derart an der Tragscheibe angeordnet, dass die Schneide an beiden axialen Seiten der Tragscheibe übersteht. Insbesondere sind die Messer mittig zur Tragscheibe ausgerichtet. Insbesondere erstreckt sich die Schneide symmetrisch zu beiden axialen Seiten der Tragscheibe. Die Messer sind insbesondere symmetrisch über die Tragscheibe verteilt. Insbesondere sind die Messer, vorzugsweise wenigstens ihre Schneiden, breiter als die (jeweils zugehörige) Tragscheibe ausgebildet.

Insbesondere weist ein Messerrad wenigstens acht und vorzugsweise wenigstens zehn Messer auf. Insbesondere weist ein Messerrad maximal 16 und vorzugsweise maximal 14 Messer auf. Besonders bevorzugt weist ein Messerrad zwölf Messer auf. Der Durchmesser eines Messerrads beträgt insbesondere zwischen 400 mm und 600 mm und beispielsweise 500 mm +/- 50 mm. Möglich sind auch größere Durchmesser, beispielsweise 700 mm oder 800 mm.

Vorzugsweise sind die zu einem Messerwalzenmodul gehörenden Messerradeinheiten auf einer gemeinsamen Achseinheit angeordnet. Vorzugsweise sind die zu dem Messerwalzenmodul gehörenden Messerradeinheiten jeweils separat und insbesondere unabhängig voneinander drehbar auf der gemeinsamen Achseinheit gelagert. Insbesondere sind für die Messerradeinheiten jeweils wenigstens zwei Wälzlager vorgesehen. Die Achseinheit ist insbesondere an der Anbindungseinrichtung befestigt. Insbesondere sind die Messerwalzenmodule jeweils nur über ihre Achseinheit mit der Anbindungseinrichtung verbunden. Insbesondere umfassen die Messerwalzenmodule jeweils wenigstens eine und vorzugsweise nur eine Achseinheit.

Die zu einer Messerradeinheit gehörenden Messerräder sind vorzugsweise mittels wenigstens einer Verbindungshülse (wenigstens paarweise) aneinander drehfest befestigt. Insbesondere umfassen die Messerwalzenmodule jeweils nur zwei Messerradeinheiten, welche jeweils mittels einer Verbindungshülse drehbar auf der Achseinheit gelagert sind. Das ermöglicht eine besonders kompakte und konstruktiv unaufwendige Umsetzung der Messerwalzenmodule.

Insbesondere umgibt die Verbindungshülse die Achseinheit wenigstens abschnittsweise koaxial. Insbesondere ist die Verbindungshülse auf der Achseinheit gelagert. Die Verbindungshülse kann wenigstens einen Schmierstellenzugang für die Lagerung aufweisen, beispielsweise einen Schmiernippel.

Die Messerwalzenmodule sind insbesondere jeweils zentral und vorzugsweise jeweils nur zwischen ihren Messerradeinheiten an der Anbindungseinrichtung befestigt. Insbesondere liegt die Achseinheit zwischen den Messerradeinheiten frei und ist dort mit der Anbindungseinrichtung verbunden. Insbesondere ist die Anbindungseinrichtung axial mittig auf der Achseinheit angeordnet. Insbesondere ist die Anbindungseinrichtung mittig zwischen den beiden äußeren Messerrädern angeordnet. Möglich ist auch eine außermittige Anbindung.

Insbesondere sind zu beiden axialen Seiten der Anbindungseinrichtung jeweils die gleiche Anzahl an Messerrädern und vorzugsweise auch an Messerradeinheiten angeordnet.

Insbesondere sind zu beiden axialen Seiten der Anbindungseinrichtung zwei Messerradeinheiten mit jeweils zwei Messerrädern angeordnet.

In einer bevorzugten und vorteilhaften Weiterbildung ist zwischen benachbarten und zu unterschiedlichen Messerradeinheiten desselben Messerwalzenmoduls gehörenden Messerrädern wenigstens ein (erster) Abstreifer angeordnet. Insbesondere die der Abstreifer zum Abstreifen von anhaftendem Boden und/oder Pflanzenmaterial. Vorzugsweise wird der Abstreifer durch die Anbindungseinrichtung bereitgestellt. Der Abstreifer kann auch separat zu Anbindungseinrichtung ausgebildet sein.

Insbesondere ist zwischen benachbarten und zu unterschiedlichen Messerwalzenmodulen gehörenden Messerrädern kein Abstreifer angeordnet. Es hat sich gezeigt, dass aufgrund des Aufbaus und der Dimensionierung der Messerwalzenmodule an dieser Stelle auf einen Abstreifer verzichtet werden kann, ohne dass Boden haften bleibt.

Es ist bevorzugt und vorteilhaft, dass zwischen benachbarten und zu einer gemeinsamen Messerradeinheit gehörenden Messerrädern wenigstens ein (zweiter) Abstreifer angeordnet ist. Vorzugsweise ist der Abstreifer (direkt) an der Anbindungseinrichtung befestigt. So kann auch zwischen den drehfest gekoppelten Messerrädern der Anhaftung von Boden sehr zuverlässig entgegengewirkt werden.

In einer ebenfalls bevorzugten und vorteilhaften Weiterbildung sind die zu einer gemeinsamen Messerradeinheit gehörenden Messerräder in Umfangsrichtung verdreht (bzw. versetzt) zueinander angeordnet. Insbesondere sind die Messerräder derart verdreht zueinander angeordnet, dass die Messer des einen Messerrads mittig zwischen den Messern des benachbarten Messerrads ausgerichtet sind. Das wirkt dem Zusetzen der Freiräume zwischen den Messerrädern und auch zwischen den Messern selbst besonders zuverlässig entgegen. Aufgrund der drehfesten Kopplung bleibt dieser Versatz auch im Betrieb bestehen.

Vorzugsweise sind die Drehachsen (insbesondere alle Drehachsen) der Messerräder der Messerwalzenmodule jeweils einer Messerwalzenreihe in einem gleichen Anstellwinkel zur Arbeitsrichtung schräg gestellt. Vorzugsweise sind die Drehachsen der Messerräder von verschiedenen Messerwalzenreihen gegenläufig ausgerichtet. Insbesondere sind die Drehachsen der Messerräder von verschiedenen Messerwalzenreihen in unterschiedlichen Drehrichtungen zur Arbeitsrichtung schräg gestellt. Beispielsweise ist die wenigstens eine Messerwalzenreihe in Bezug auf ihre Drehachsen im Uhrzeigersinn und die wenigstens eine andere Messerwalzenreihe in Bezug auf ihre Drehachsen gegen den Uhrzeigersinn zur Arbeitsrichtung schräg gestellt. Dabei können (nur) die Vorzeichen der Drehwinkel unterschiedlich sein. Möglich ist aber auch, dass Drehwinkel selbst (also in Bezug auf ihren Betrag) unterschiedlich sind.

Besonders bevorzugt sind die Drehachsen der Messerräder der Messerwalzenmodule jeweils einer Messerwalzenreihe in einem gleichen Anstellwinkel mit gleicher Drehrichtung zur Arbeitsrichtung schräg gestellt. Insbesondere ist für wenigstens eine der wenigstens zwei Messerwalzenreihen der Anstellwinkel mit einer Linksdrehung vorgesehen. Insbesondere ist für wenigstens eine andere der wenigstens zwei Messerwalzenreihen der Anstellwinkel mit einer Rechtsdrehung vorgesehen. Insbesondere sind die Messerwalzenreihen (dadurch) in Bezug auf ihre Drehachsen gegenläufig angeordnet. Mit anderen Worten, für die Messerwalzenreihen ist jeweils der gleiche Anstellwinkel jedoch mit einem umgekehrten Vorzeichen vorgesehen. So wird das Pflanzenmaterial noch umfassender zerkleinert und mit dem Boden vermischt.

Insbesondere sind die Drehwinkel der einen Messerwalzenreihe zum Beispiel um 75° nach rechts schräg gestellt (+ 75°) und die Drehachsen der anderen Messerwalzenreihe um 75° nach links schräg gestellt (- 75°).

Die Drehachsen der Messerräder stehen insbesondere in einem definierten Anstellwinkel zur bestimmungsgemäßen Arbeitsrichtung bzw. zur Längsrichtung des Anbaugeräts. Der Anstellwinkel kann zwischen 1° und 89° betragen. Der Anstellwinkel beträgt insbesondere zwischen 65° und 85° und vorzugsweise zwischen 70° und 80° und besonders bevorzugt zwischen 72° und 78°. Insbesondere beträgt der Anstellwinkel 75° +/- 2° und vorzugsweise 75° +/- 1°. Der Anstellwinkel beträgt in einer vorteilhaften Ausführung zum Beispiel 75°.

Insbesondere stehen die Drehachsen bei einem Anstellwinkel von 90° rechtwinklig zur Arbeitsrichtung und bei einem Anstellwinkel von 0° parallel zur Arbeitsrichtung. Mit abnehmendem Anstellwinkel wird daher eine pflugartige Wirkung der Messerräder verstärkt.

In allen Ausgestaltungen ist es bevorzugt und vorteilhaft, dass die Drehachsen der Messerräder der Messerwalzenmodule jeweils einer Messerwalzenreihe parallel zueinander ausgerichtet sind. Insbesondere sind alle Drehachsen einer Messerwalzenreihe parallel zueinander ausgerichtet. Möglich ist auch, dass in den Messerwalzenreihen jeweils unterschiedliche und beispielsweise gegenläufige Anordnungen für die Drehachsen vorgesehen sind.

Insbesondere sind die Drehachsen der Messerräder der Messerwalzenmodule jeweils einer Messerwalzenreihe nicht in axialer Richtung fluchtend zueinander angeordnet. Insbesondere sind die Drehachsen parallel und versetzt (in der Art einer Parallelverschiebung) ausgerichtet. Dadurch ergeben sich besonders kompakte Abmessungen für das Anbaugerät.

In einer vorteilhaften Weiterbildung oder bei einem ebenfalls erfindungsgemäßen Anbaugerät (insbesondere nach dem Oberbegriff von Anspruch 1) beträgt eine maximale axiale Breite der Messer maximal das Dreifache und bevorzugt maximal das 2,5-fache und besonders bevorzugt maximal das Zweifache eines minimalen Abstands zweier in axialer Richtung benachbarter Messer. Eine solche Dimensionierung hat sich als besonders vorteilhaft erwiesen, um ein Zusetzen der Messerzwischenräume zuverlässig zu vermeiden. Dabei kann der minimale Abstand beispielsweise 40 mm oder mehr betragen.

Die maximale Breite der Messer kann auch maximal das Vierfache des minimalen Abstands betragen. Eine solche Ausgestaltung ist vorteilhaft bei einem minimalen Abstand von zum Beispiel weniger als 30 mm.

Die benachbarten Messer sind insbesondere die Messer einer gemeinsamen Messerradeinheit und/oder benachbarter Messerradeinheiten und/oder benachbarter Messerwalzenmodule. Es ist möglich, dass sich die maximale axiale Breite der Messer nur auf die Schneiden und/oder nur auf den Messerkörper bezieht.

Die maximale axiale Breite der Messer beträgt insbesondere maximal 120 mm und vorzugsweise maximal 100 mm und besonders bevorzugt maximal 80 mm. Insbesondere sind die Schneiden und/oder die Messerkörper derart breit ausgebildet. Insbesondere beträgt die maximale axiale Breite der Messer zwischen 50 mm und 90 mm und vorzugsweise zwischen 60 mm und 80 mm. Insbesondere beträgt die maximale axiale Breite 70 mm +/- 5 mm und beispielsweise 70 mm.

Vorzugsweise beträgt ein minimaler Abstand zweier in axialer Richtung benachbarter Messer zwischen 25 mm und 60 mm. Besonders bevorzugt beträgt der minimale Abstand zwischen 30 mm und 50 mm. Insbesondere ist ein minimaler Abstand von 40 mm +/- 5 mm vorgesehen. Beispielsweise beträgt der minimale Abstand 40 mm. Solche Dimensionen für die Messer bzw. Abstände haben sich mit dem hier vorgestellten Aufbau der Messerwalzenmodule als besonders vorteilhaft hinsichtlich der Zerkleinerung und auch der Selbstreinigung erwiesen. Möglich sind auch größere Abstände, beispielsweise von 70 mm oder 80 mm oder mehr.

Insbesondere weisen die Messerwalzenmodule jeweils eine Breite von maximal einem Vierzehnfachen und vorzugsweise maximal einem Zwölffachen des minimalen Abstands zweier in axialer Richtung benachbarter Messer auf. Beispielsweise beträgt die Breite der Messerwalzenmodule das Zehnfache des minimalen Abstands. Insbesondere weisen die Messerwalzenmodule eine Breite von wenigstens 350 mm und insbesondere von maximal 550 mm auf. Beispielsweise beträgt die Breite der Messerwalzenmodule 400 mm. Möglich sind auch breitere Messerwalzenmodule, beispielsweise mit einer Breite von 600 mm oder 800 mm oder mehr. Insbesondere wird die Verbreiterung der Module dadurch erreicht, dass die Messerradeinheiten eine größere Anzahl (z. b. drei oder mehr) Messerräder aufweisen.

In allen Ausgestaltungen ist es bevorzugt, dass die wenigstens zwei Messerwalzenreihen mit einem definierten axialen (bzw. seitlichen) Versatz zueinander an dem Traggestell angeordnet sind. Der Versatz entspricht insbesondere wenigstens einem Viertel und vorzugsweise wenigstens der Hälfte einer maximalen axialen Breite der Messer. Vorzugsweise ist der Versatz so ausgebildet, dass ein Freiraum zwischen zwei benachbarten Messern einer Messerwalzenreihe durch ein Messer der dahinterliegenden Messerwalzenreihe kompensiert werden kann.

Insbesondere ist die Schneidvorrichtung mittels der Messer auch zur Bodenbearbeitung geeignet und ausgebildet. Insbesondere stehen die Messer dazu mit einem definierten überstand an den Tragscheiben nach radial außen hervor. Insbesondere können die Messer wenigstens mit dem überstand (insbesondere der Länge des Überstands) in den Boden eingreifen. Insbesondere ist für die Bodenbearbeitung eine Arbeitstiefe vorgesehen, welche der Länge des Überstands der Messer entspricht. Die hier vorgestellte Schneidvorrichtung eignet sich aufgrund ihrer besonderen Eigenschaften besonders gut dazu, parallel zur Zerkleinerung des Pflanzenmaterials auch eine Bearbeitung und insbesondere Durchmischung des Bodens vorzunehmen. Zudem kann das zerkleinerte Pflanzenmaterial direkt in den Boden eingearbeitet werden. Insbesondere sind die Messer dazu mit einer entsprechenden Stärke ausgeführt.

Vorzugsweise weisen die Messer jeweils wenigstens eine Verstärkungsrippe auf. Beispielsweise ist die Verstärkungsrippe als eine Sicke in den Messerkörper eingearbeitet. Insbesondere verläuft die Verstärkungsrippe quer zur Schneide.

Die Messer sind insbesondere als Blechteile ausgeführt. Insbesondere sind die Messer mit wenigstens einer und vorzugsweise wenigstens zwei Verschraubungen an der Tragscheibe lösbar befestigt.

Es ist möglich, dass das Anbaugerät wenigstens eine an dem Traggestell befestigbare Ballastierung zum Eindrücken der Schneidvorrichtung in den Boden und vorzugsweise zum Erreichen der Arbeitstiefe aufweist. Insbesondere ist die Ballastierung wenigstens oberhalb der Messerwalzenreihen angeordnet. Insbesondere überspannt die Ballastierung die Messerwalzenreihen wenigstens teilweise in Arbeitsrichtung und/oder Querrichtung.

Insbesondere umfasst die Ballastierung mehrere separate Ballastgewichte. Insbesondere ist für zwei hintereinander angeordnete Messerwalzenmodule jeweils wenigstens ein Ballastgewicht vorgesehen. Es kann auch für jedes Messerwalzenmodul wenigstens ein Ballastgewicht vorgesehen sein. Das ermöglicht eine besonders einfache Bestückung und gezielte Ausrichtung der Ballastierung. Die Ballastgewichte sind beispielsweise quaderförmig ausgebildet.

Die Anbindungseinrichtungen verlaufen insbesondere schräg und/oder gebogen von den Messerwalzenreihen zum Traggestell. Es ist möglich, dass die Anbindungseinrichtungen der wenigstens einen Messerwalzenreihe gegenläufig (gebogen bzw. schräg) zu den Anbindungseinrichtungen der wenigstens einen anderen Messerwalzenreihe verlaufen. Das bietet bei einem Frontanbau erhebliche Vorteile, da das Anbaugerät dadurch insgesamt kürzer baut. Ein Frontanbau ist bei hohen Pflanzen bzw. Zwischenfrüchten und beispielsweise Senf von Vorteil. Die Anbindungseinrichtungen der Messerwalzenreihen können auch in eine gleiche Richtung verlaufen. Insbesondere verlaufen die zu einer Messerwalzenreihe gehören den Anbindungseinrichtungen gleich schräg und/oder gleich gebogen und vorzugsweise in die gleiche Richtung.

Die Anbindungseinrichtung umfasst insbesondere wenigstens einen und vorzugsweise nur einen Federarm. Insbesondere ist der Federarm an dem Traggestell befestigt. Der Federarm kann direkt oder über wenigstens ein Tragelement an dem Messerwalzenmodul und insbesondere an dessen Achseinheit befestigt sein. Beispielsweise ist der Federarm als ein Flachprofil ausgebildet oder umfasst wenigstens ein solches. Insbesondere ist die Anbindungseinrichtung wenigstens teilweise elastisch ausgebildet. Insbesondere sind der Federarm und/oder das Tragelement elastisch ausgebildet.

Das Traggestell umfasst insbesondere Querträger und Längsträger. Insbesondere bilden die Querträger und die Längsträger ein rahmenartiges Traggestell. Insbesondere umfasst das Traggestell wenigstens eine Anbauvorrichtung, um das Traggestell an einer Zugmaschine anzukoppeln. Insbesondere ist die Anbauvorrichtung als eine Dreipunktaufnahme für einen Heckkraftheber und/oder Frontkraftheber ausgebildet. Insbesondere sind die Anbindungseinrichtungen der zu einer Messerwalzenreihe gehörenden Messerwalzenmodule an einem gemeinsamen Querträger befestigt.

Es ist möglich und vorteilhaft, dass das Anbaugerät wenigstens eine an dem Traggestell befestigte und in Arbeitsrichtung vor der Schneidvorrichtung angeordnete Vorbehandlungseinheit umfasst. Die Vorbehandlungseinheit dient insbesondere zum Andrücken des Pflanzenmaterials auf den Boden vor der Bearbeitung mit der Schneidvorrichtung. Insbesondere umfasst die Vorbehandlungseinheit wenigstens einen Querbalken. Insbesondere erstreckt sich der Querbalken unterhalb der Drehachsen der Messerräder. Insbesondere ist die Vorbehandlungseinheit elastisch an dem Taggestell befestigt.

In allen Ausgestaltungen ist die Schneidvorrichtung durch eine Vorwärtsbewegung des Anbaugeräts passiv antreibbar. Insbesondere ist das Anbaugerät zur Zerkleinerung von Pflanzenmaterial in Arbeitsrichtung schiebbar und/oder ziehbar. Insbesondere ist ein Heckanbau und/oder ein Frontanbau an einer Zugmaschine möglich.

Insbesondere liegt die Schneide zu beiden axialen Seiten der Tragscheibe frei. Insbesondere liegt die Schneide und vorzugsweise das Messer zu mehr als 50 % und vorzugsweise zu mehr als 75 % zu beiden axialen Seiten der Tragscheibe frei. Insbesondere beträgt eine Stärke der Tragscheibe weniger als ein Fünftel und vorzugsweise weniger als ein Sechstel einer maximalen axialen Breite des Messers und insbesondere der Schneide.

Insbesondere ist die Schneide an einem (abgeflachten) Messerkörper ausgebildet. Insbesondere ist der Messerkörper rechtwinklig zur Hauptebene der Tragscheibe ausgerichtet. Insbesondere sind die Schneide und der Messerkörper einstückig miteinander verbunden. Insbesondere erstreckt sich der Messerkörper in einer Hauptebene des Messers. Insbesondere sind eine maximale axiale Breite des Messerkörpers und eine maximale axiale Breite der Schneider gleich. Die axiale Breite der Schneide kann auch als Länge der Schneide bezeichnet werden.

Insbesondere umfassen die Messerwalzenreihen jeweils wenigstens vier und vorzugsweise wenigstens fünf und besonders bevorzugt wenigstens sechs Messerwalzenmodule. Je nach gewünschter Arbeitsbreite können beispielsweise acht oder zehn oder sogar zwölf oder mehr Messerwalzenmodule pro Messerwalzenreihe vorgesehen sein.

Die Messerwalzenmodule weisen insbesondere jeweils nur zwei Messerradeinheiten auf. Insbesondere weisen die Messerwalzenmodule jeweils eine gerade Anzahl an Messerradeinheiten auf. Die Messerwalzenmodule können beispielsweise auch vier oder sechs Messerradeinheiten aufweisen. Insbesondere umfassen die Messerwalzenmodule wenigstens vier drehbare Messerräder. Die Messerwalzenmodule können z. B. auch wenigstens sechs oder acht Messerräder oder mehr aufweisen.

Insbesondere weisen die Messerradeinheiten jeweils (nur) zwei Messerräder auf. Die Messerradeinheiten können auch jeweils wenigstens drei oder wenigstens vier oder fünf oder mehr Messerräder aufweisen.

Insbesondere weisen die zu einem Messerwalzenmodul gehörenden Messerradeinheiten jeweils die gleiche Anzahl Messerräder auf. Insbesondere sind die zu einem Messerwalzenmodul gehörenden Messerradeinheiten jeweils gleich ausgebildet. Insbesondere sind die Messerwalzenmodule in Bezug auf die Messerradeinheiten und/oder die Messerräder symmetrisch ausgebildet.

Insbesondere sind die Messerräder und vorzugsweise die Messerradeinheiten und besonders bevorzugt die Messerwalzenmodule gleich ausgebildet. Insbesondere unterscheiden sich die Messerwalzenreihen untereinander nur in Bezug auf die Drehrichtung des Anstellwinkels. Insbesondere sind die Anbindungseinrichtungen gleich ausgebildet. Insbesondere sind die Messer eines Messerrads und vorzugsweise einer Messerradeinheit und besonders bevorzugt eines Messerwalzenmoduls gleich ausgebildet.

Insbesondere sind die Messerwalzenmodule jeweils über wenigstens eine und vorzugsweise jeweils über nur eine Anbindungseinrichtung (unmittelbar oder mittelbar) am Traggestell angebunden. Insbesondere sind die Messerwalzenmodule unabhängig voneinander am Traggestell befestigt. Die Anbindungseinrichtungen können aber auch miteinander gekoppelt und dann am Traggestell befestigt sein.

Insbesondere stehen die Drehachsen schräg zur Längsrichtung und schräg zur Querrichtung des Anbaugeräts. Insbesondere sind die Messerwalzenmodule derart am Traggestell angebunden, dass die Drehachsen schräg bzw. im Anstellwinkel zur Arbeitsrichtung stehen. Die Arbeitsrichtung entspricht insbesondere einer Längsrichtung des Anbaugeräts.

Die Drehachsen der Messerräder jeweils eines Messerwalzenmoduls sind insbesondere deckungsgleich. Die Drehachsen der Messerräder jeweils eines Messerwalzenmoduls werden insbesondere durch wenigstens eine und vorzugsweise nur eine Achseinheit bereitgestellt. Insbesondere werden die Drehachsen durch die Achseinheiten konstruktiv verwirklicht. Unter einer Drehachse wird insbesondere eine gedachte Achse verstanden. Insbesondere sind die Drehachsen der zu einem Messerwalzenmodul gehörenden Messerräder deckungsgleich mit einer Längsachse der Achseinheit des Messerwalzenmoduls. Insofern können im Rahmen der vorliegenden Erfindung die Begriffe Drehachse und Achseinheit soweit sinnvoll synonym verwendet werden.

Weitere Vorteile und Merkmale der vorliegenden Erfindung ergeben sich aus der Beschreibung der Ausführungsbeispiele, die im Folgenden mit Bezug auf die beiliegenden Figuren erläutert werden.

In den Figuren zeigen:
- Figur 1: eine rein schematische Darstellung eines erfindungsgemäßen Anbaugeräts in einer Draufsicht;
- Figur 2: das Anbaugerät der Fig. 1 in einer Seitenansicht;
- Figur 3: das Anbaugerät der Fig. 1 in einer Rückansicht;
- Figur 4: eine rein schematische Detaildarstellung des erfindungsgemäßen Anbaugeräts in einer Rückansicht;
- Figur 5: eine Detaildarstellung des Anbaugeräts in einer entlang der Linie A-A der Fig. 4 geschnittenen Seitenansicht; und
- Figur 6: eine rein schematische Darstellung eines erfindungsgemäßen Anbaugeräts in einer Seitenansicht.

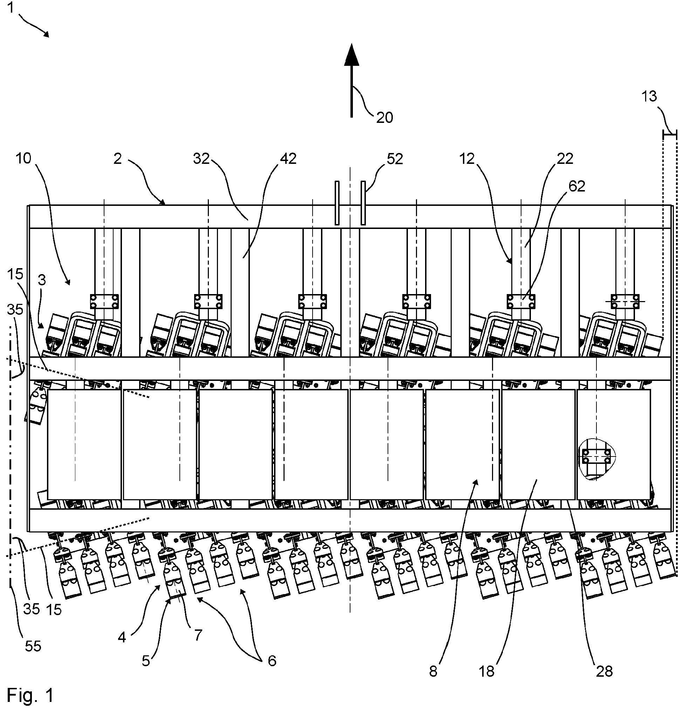

Die Figur 1 zeigt ein erfindungsgemäßes Anbaugerät 1 mit einem Traggestell 2 und einer Schneidvorrichtung 10 zum gezielten Zerschneiden von Pflanzenmaterial und beispielsweise Maisstoppeln. Das Traggestell 2 umfasst hier mehrere Längsträger 42 und Querträger 32, welche rahmenartig miteinander verbunden sind.

Die Schneidvorrichtung 10 wird dadurch angetrieben, dass das Anbaugerät 1 von einem Schlepper in die bestimmungsgemäße Arbeitsrichtung 20 gezogen wird. Dazu ist an dem Traggestell 2 hier eine Anbauvorrichtung 52 und beispielsweise eine Dreipunktaufnahme vorgesehen. Das hier gezeigte Anbaugerät 1 kann beispielsweise mit einer Arbeitsgeschwindigkeit von 15 Km/h oder mehr eingesetzt werden.

Die Arbeitsrichtung 20 erstreckt sich hier in einer Längsrichtung 55 (bzw. Längsachse; zur besseren Veranschaulichung hier strichpunktiert eingezeichnet) des Anbaugeräts 1. Das Anbaugerät 1 kann hier auch wahlweise in eine entgegengesetzte Arbeitsrichtung 20 eingesetzt werden, sodass es von dem Schlepper geschoben wird.

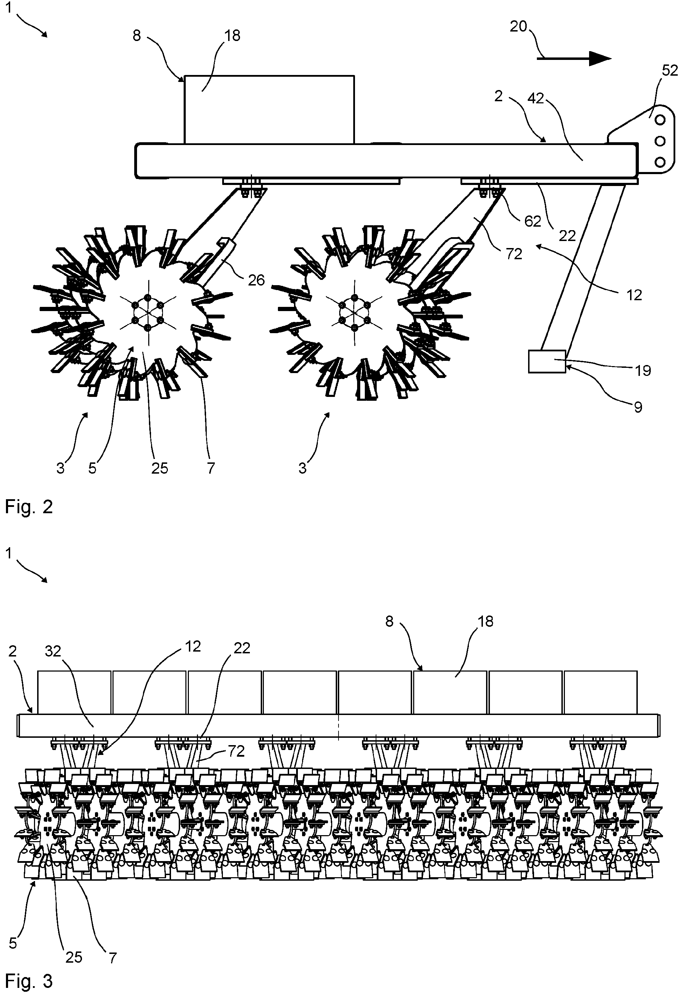

Das Anbaugerät 1 wird nun mit Bezug zu den Figuren 1 bis 3 näher beschrieben. Die Schneidvorrichtung 10 umfasst hier zwei schräg hintereinander angeordnete Messerwalzenreihen 3 mit jeweils sechs Messerwalzenmodulen 4. Die Messerwalzenmodule 4 umfassen hier jeweils vier um eine gemeinsame Drehachse 15 drehbare Messerräder 5. Die Messerräder 5 umfassen jeweils eine Tragscheibe 25 mit einer Mehrzahl von Messern 7.

Die Messerräder 5 eines Messerwalzenmoduls 4 sind hier in zwei Messerradeinheiten 6 gruppiert. Die Messerräder 5 der Messerradeinheiten 6 sind jeweils drehfest miteinander verbunden. Die Messerradeinheiten 6 selbst können hingegen unabhängig voneinander um die Drehachse 15 gedreht werden.

Die Drehachsen 15 sind schräg zur Arbeitsrichtung 20 ausgerichtet. Zur besseren Veranschaulichung sind hier jeweils eine Drehachse 15 der vorderen und der hinteren Messerwalzenreihe 3 gestrichelt eingezeichnet. Die Drehachsen 15 sind hier in einem definierten Anstellwinkel 35 zur Längsrichtung 55 bzw. Arbeitsrichtung 20 ausgerichtet.

Zur Schrägstellung der Drehachsen 15 sind die Messerwalzenmodule 4 hier jeweils im gewünschten Anstellwinkel 35 mittels jeweils einer Anbindungseinrichtung 12 an dem Traggestell 2 angebunden.

Für die hier beispielhaft gezeigte Ausführungsform wurde ein Anstellwinkel 35 von 75° gewählt. Je nach Anwendungsfall und beispielsweise Pflanzenmaterial oder Bodenbeschaffenheit kann der Anstellwinkel 35 in geeigneter Weise angepasst werden.

Für die beiden Messerwalzenreihen 3 sind hier betragsmäßig die gleichen Anstellwinkel 35 vorgesehen. Allerdings unterscheiden sich die Messerwalzenreihen 3 in der Drehrichtung der Anstellwinkel 35. So ist für die vordere Messerwalzenreihe 3 hier ein Anstellwinkel 35 mit einer Rechtsdrehung und für die hintere Messerwalzenreihe 3 ein Anstellwinkel 35 mit einer Linksdrehung vorgesehen. Dadurch ergibt sich die hier gezeigte gegenläufige Anordnung der Messerwalzenreihen 3 in Bezug auf ihre Drehachsen 15.

Innerhalb einer Messerwalzenreihe 3 sind die Drehachsen 15 parallel zueinander ausgerichtet. Dabei sind die Drehachsen 15 nicht fluchtend angeordnet, sondern weisen einen Versatz in der Art einer Parallelverschiebung auf.

Die Anbindungseinrichtungen 12 umfassen hier jeweils ein Trägerelement 72 und eine Anbindungsplatte 62 sowie einen Federarm 22. Die Trägerelemente 72 sind jeweils an einem Messerwalzenmodul 4 befestigt. Die Federarme 22 sind hier jeweils an einen Querträger 32 des Traggestells 2 befestigt.

Die Tragelemente 72 sind jeweils über die Anbindungsplatte 62 an einem Federarm 22 verschraubt. In dem hier gezeigten Beispiel wird der Anstellwinkel 35 dadurch erreicht, dass das Tragelement 72 in dem Anstellwinkel 35 mit der Anbindungsplatte 62 verbunden und beispielsweise verschweißt ist.

Die Federarme 22 sind hier elastisch ausgebildet, um die im Betrieb auf die Schneidvorrichtung 10 einwirkenden Kräfte gegenüber dem Traggestell 2 abfangen zu können.

Für einen Frontanbau kann vorgesehen sein, dass die hier gezeigten Anbindungseinrichtungen 12 der vorderen Messerwalzenreihe 3 gegenläufig zu den Anbindungseinrichtungen 12 der hinteren Messerwalzenreihe 3 angeordnet werden. Beispielsweise wird dazu die Schrägstellung der Tragelemente 72 für eine Messerwalzenreihe 3 um 180° gedreht.

In Arbeitsrichtung 20 vor der Schneidvorrichtung 10 ist hier eine Vorbehandlungseinheit 9 mit einem Querbalken 19 zum Andrücken der Pflanzen angebracht. Der Querbalken 19 drückt beispielsweise die Maisstoppel auf dem Boden, sodass diese besser geschnitten werden können.

Zum Andrücken auf das Pflanzenmaterial und auch zum Eindrücken der Messer 7 in den Boden ist hier eine Ballastierung 8 vorgesehen. Die Ballastierung 8 umfasst hier eine Mehrzahl von Ballastgewichten 18, welche oberhalb der Messerwalzenreihen 3 angeordnet sind. Die Ballastgewichte 18 können hier in einer nicht näher dargestellten Ballastaufnahme 28 eingesetzt werden, sodass sie im Betrieb sicher befestigt sind.

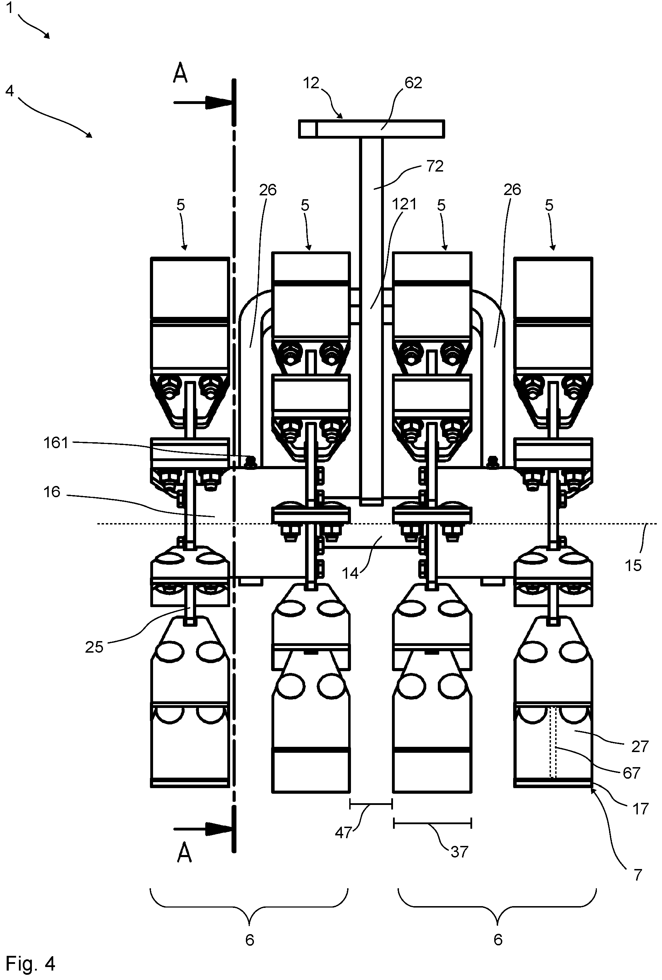

Die Messerwalzenreihen 3 sind hier mit einem definierten axialen Versatz 13 zueinander ausgerichtet. Der Versatz 13 entspricht hier einer halben axialen Breite 37 der Messer 7 (zur Breite 37 siehe Figur 4). Dadurch wird gewährleistet, dass die Messer 7 der hinteren Messerwalzenreihe 3 spurversetzt zu den Messern 7 der vorderen Messerwalzenreihe 3 laufen und beispielsweise in deren Freiräume bzw. Abstände 47 eingreifen.

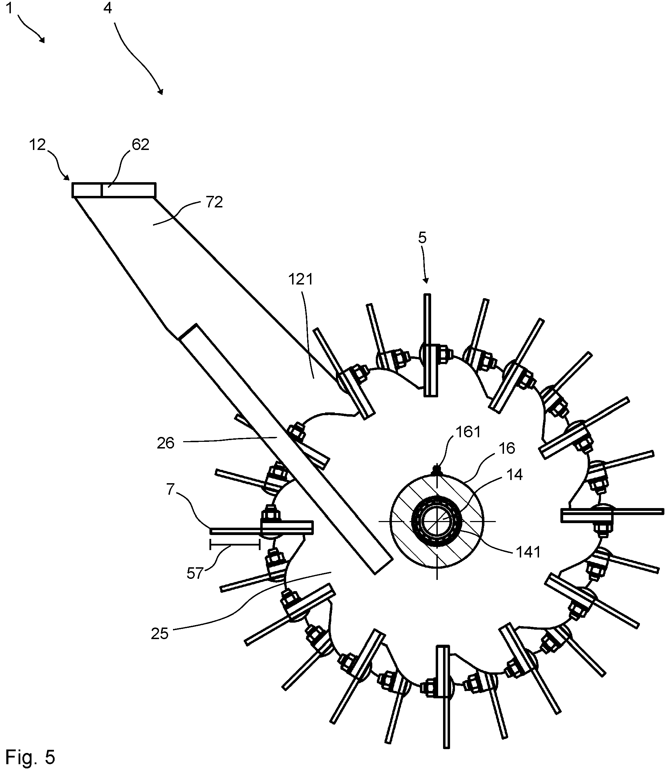

Mit Bezug zu den Figuren 4 und 5 wird nun eines der Messerwalzenmodule 4 des zuvor beschriebenen Anbaugeräts 1 näher vorgestellt. In dem hier gezeigten Beispiel sind alle Messerwalzenmodule 4 des Anbaugeräts 1 identisch ausgebildet.

Das Messerwalzenmodul 4 umfasst eine Achseinheit 14, welche hier die konstruktive Verkörperung der Drehachse 15 darstellt. Im Bereich ihrer axialen Mitte ist die Achseinheit 14 hier an dem Tragelement 72 der Anbindungseinrichtung 12 befestigt.

Auf der Achseinheit sind beide Messerradeinheiten 6 mittels einer Lagereinheit 141 mit beispielsweise wenigstens zwei Wälzlagern gelagert. Dazu sind die Messerräder 5 der Messerradeinheit 6 hier über eine Verbindungshülse 16 drehfest aneinander gekoppelt.

Die Verbindungshülse 16 umgibt die Achseinheit 14 konzentrisch, sodass zwischen ihnen die Lagereinheit 141 angeordnet werden kann. In den Verbindungshülsen 16 ist jeweils ein Schmiernippel 161 angeordnet.

Die Messerradeinheiten 6 sind somit separat voneinander über jeweils eine eigene Lagereinheit 141 auf der Achseinheit 14 drehbar gelagert, sodass sie sich unabhängig voneinander drehen können.

Die Messerräder 5 der Messerradeinheit 6 sind hier in Umfangsrichtung verdreht zueinander angeordnet. Dadurch stehen die Messer 7 des einen Messerrads 5 mittig zwischen den Messern 7 des anderen Messerrads 5.

Das Tragelement 72 dient hier zugleich auch als Abstreifer 121 zum Entfernen von anhaftendem Boden bzw. Pflanzenmaterial. Für die beiden Messerradeinheiten 6 ist hier ebenfalls jeweils ein Abstreifer 26 vorgesehen. Der Abstreifer 26 ist an dem Tragelement 72 befestigt und erstreckt sich zwischen die beiden Messerräder 5 der Messerradeinheit 6.

Die Messer 7 umfassen jeweils einen abgeflachten Messerkörper 27 und eine am Messerkörper 27 ausgebildete Schneide 17. Die Messer 7 sind hier so an der Tragscheibe 25 befestigt, dass die Schneide 17 im gleichen Maß zu beiden axialen Seiten der Tragscheibe 25 übersteht.

In der hier gezeigten Ausführungsform weisen die Messer 7 eine maximale axiale Breite 37 von 70 mm auf. Die Breite 37 entspricht hier der axialen Breite bzw. Länge der Schneide und auch der maximalen Breite des Messerkörpers 27. In axialer Richtung weisen die benachbarten Messer 7 der Messerräder 5 hier einen minimalen Abstand 47 von 40 mm auf. Vorzugsweise ist ein solcher Abstand 47 auch zwischen den benachbarten Messern 7 von nebeneinander angeordneten Messerwalzenmodulen 4 vorgesehen.

Die Messerwalzenmodule 4 wurden hier so dimensioniert, dass die Breite 37 nicht mehr als das Zweifache des Abstands 47 beträgt. Eine solche Dimensionierung hat sich in Versuchen als besonders vorteilhaft erwiesen, damit sich die Freiräume zwischen den Messern 7 auch auf besonders stark haftenden Böden nicht zu setzen oder sich im Betrieb selbst reinigen können. Das betrifft hier insbesondere die Zwischenräume zwischen den Messern 7 der einzelnen Messerräder 5, welche aufgrund der Rotation nicht durch Abstreifer oder dergleichen gereinigt werden können.

Der Effekt der Dimensionierung wird hier zudem durch die drehfest gekoppelten Messerräder 5 und die drehbaren Messerradeinheiten 6 unterstützt. Einen weiteren vorteilhaften Einfluss auf die Selbstreinigung haben hier zudem die Anstellwinkel 35 der Drehachsen 15 sowie die parallel zur Drehachse 15 angeordneten Messer 7.

Die Schneidvorrichtung 10 kann hier zusätzlich zur Zerkleinerung von Pflanzenmaterial auch zur Bodenbearbeitung eingesetzt werden. Dazu stehen die Messer 7 hier mit einem definierten überstand 57 nach radial außen an den Tragscheiben 25 hervor. Mit der Länge dieses Überstands 57 greifen die Messer 7 in den Boden ein und vermischen diesen zusammen mit dem zerkleinerten Pflanzenmaterial. Die hier beschriebene Ballastierung 8 ist so ausgelegt, dass die Messer 7 mit ihrem überstand 57 im Betrieb in den Boden eingedrückt werden.

Es kann vorgesehen sein, dass die Messer 7 mit einer Verstärkungsrippe 67 und beispielsweise einer Sicke oder dergleichen ausgestattet sind. Das ist beispielsweise auf festen Böden und hohen Arbeitsgeschwindigkeiten von Vorteil.

Es hat sich gezeigt, dass für eine wirksame Zerkleinerung des Pflanzenmaterials nicht nur die Schneidwirkung der Schneidvorrichtung 10 eine entscheidende Rolle spielt, sondern auch deren Zusammenwirken mit dem jeweiligen Boden, auf denen das Pflanzenmaterial gewachsen ist. So bieten die bisher bekannten Maschinen zwar mitunter eine insgesamt zufriedenstellende Zerkleinerungswirkung, können diese aber auf bestimmten Böden nicht zuverlässig aufrechterhalten. Das ist insbesondere mit Blick auf die Schädlingsbekämpfung bei Maisstoppeln problematisch.

Das hier vorgestellte Anbaugerät 1 bietet hingegen eine besonders wirksame Zerkleinerung des Pflanzenmaterials auch auf schweren Böden. Es hat sich gezeigt, dass die hier gezeigte Schneidvorrichtung 10 den anhaftenden Boden zuverlässig abwerfen kann oder sich erst gar nicht kritisch zusetzt.

Besonders vorteilhaft hinsichtlich der Schneidwirkung und der Selbstreinigung sowie einem konstruktiv unaufwendigen Aufbau sind die unabhängig voneinander drehbaren Messerräder 5 in Verbindung mit den drehfest gekoppelten Messerrädern 5 an den einzelnen Messerwalzenmodulen 4.

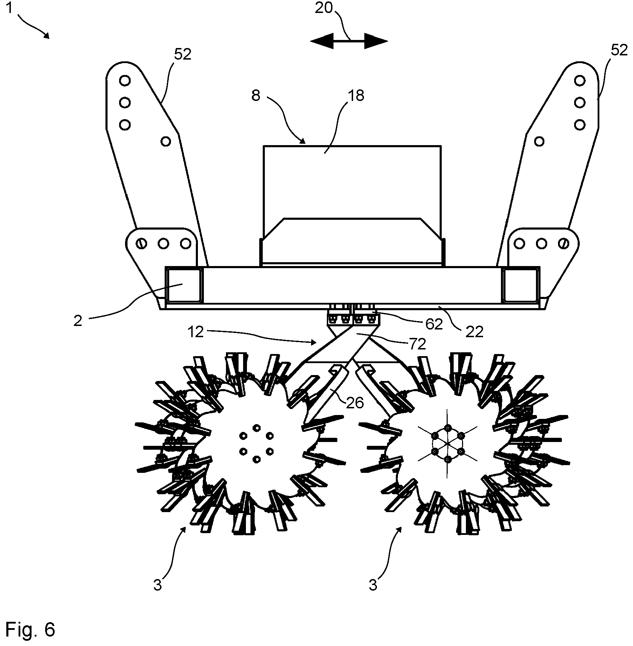

Die Figur 6 zeigt das erfindungsgemäße Anbaugerät 1 in einer Weiterbildung, bei welcher die Anbindungseinrichtungen 12 der Messerwalzenreihen 3 gegenläufig angeordnet sind. Dazu sind die Tragelemente 72 der einen Messerwalzenreihe 3 hier um 180° gedreht zu denen der anderen bei Messerwalzenreihe 3 ausgerichtet. Zudem sind die Anbindungsplatten 62 beider Messerwalzenreihen 3 möglichst nah benachbart und zentral am Traggestell 2 ausgerichtet. Dadurch ergibt sich ein insgesamt kompaktes und besonders kurz bauendes Anbaugerät 1. Das ist für einen Frontanbau von großen Vorteil, da der Abstand zwischen dem vorderen Ende des Anbaugeräts 1 und einer Lenkachse des Schleppers häufig durch gesetzliche Vorschriften begrenzt ist.

Das Traggestell 2 ist hier zudem mit zwei als Dreipunktaufnahmen ausgebildeten Anbauvorrichtungen 52 ausgestattet. Dadurch kann das Anbaugerät 1 ohne weitere Umbauten sowohl frontseitig als auch heckseitig am Schlepper angebaut werden.

### Bezugszeichenliste:

| | | | |
|---|---|---|---|
| 1 | Anbaugerät | 121 | Abstreifer |
| 2 | Traggestell | 141 | Lagereinheit |
| 3 | Messerwalzenreihe | 161 | Schmiernippel |
| 4 | Messerwalzenmodul | | |
| 5 | Messerrad | | |
| 6 | Messerradeinheit | | |
| 7 | Messer | | |
| 8 | Ballastierung | | |
| 9 | Vorbehandlungseinheit | | |
| 10 | Schneidvorrichtung | | |
| 12 | Anbindungseinrichtung | | |
| 13 | Versatz | | |
| 14 | Achseinheit | | |
| 15 | Drehachse | | |
| 16 | Verbindungshülse | | |
| 17 | Schneide | | |
| 18 | Ballastgewichte | | |
| 19 | Querbalken | | |
| 20 | Arbeitsrichtung | | |
| 22 | Federarm | | |
| 25 | Tragscheibe | | |
| 26 | Abstreifer | | |
| 28 | Ballastaufnahme | | |
| 27 | Messerkörper | | |
| 32 | Querträger | | |
| 35 | Anstellwinkel | | |
| 37 | Breite | | |
| 42 | Längsträger | | |
| 47 | Abstand | | |
| 52 | Anbauvorrichtung | | |
| 55 | Längsrichtung | | |
| 57 | Überstand | | |
| 62 | Anbindungsplatte | | |
| 67 | Verstärkungsrippe | | |
| 72 | Tragelement | | |

## Patentansprüche

1. Anbaugerät (1) für den landwirtschaftlichen Einsatz zum Zerschneiden von Pflanzenmaterial, umfassend ein Traggestell (2) und eine Schneidvorrichtung (10) mit wenigstens zwei hintereinander am Traggestell (2) angeordneten Messerwalzenreihen (3), wobei die Messerwalzenreihen (3) jeweils Messerwalzenmodule (4) mit drehbaren Messerrädern (5) mit Messern (7) mit jeweils wenigstens einer Schneide (17) aufweisen und wobei die Messerräder (5) jeweils wenigstens eine Tragscheibe (25) aufweisen, an welcher die Messer (7) derart angeordnet sind, dass sie wenigstens teilweise zu wenigstens einer axialen Seite der Tragscheibe (25) überstehen und wobei die Messerwalzenmodule (4) jeweils wenigstens eine Anbindungseinrichtung (12) zur Anbindung am Traggestell (2) umfassen, wobei die Drehachsen (15) der Messerräder (5) schräg zu einer Arbeitsrichtung (20) des Anbaugeräts (1) stehen,
**dadurch gekennzeichnet,**
**dass** die Messerwalzenmodule (4) jeweils wenigstens zwei unabhängig voneinander um eine gemeinsame Drehachse (15) drehbare Messerradeinheiten (6) aufweisen und dass die Messerradeinheiten (6) jeweils wenigstens zwei drehfest miteinander gekoppelte Messerräder (5) aufweisen und dass die Schneiden (17) parallel zur Drehachse (15) wenigstens ihres Messerrads (5) ausgerichtet sind.

2. Anbaugerät (1) nach dem vorhergehenden Anspruch, wobei die Messer (7) derart an der Tragscheibe (25) angeordnet sind, dass die Schneide (17) an beiden axialen Seiten der Tragscheibe (25) übersteht.

3. Anbaugerät (1) nach einem der vorhergehenden Ansprüche, wobei die zu einem Messerwalzenmodul (4) gehörenden Messerradeinheiten (6) auf einer gemeinsamen Achseinheit (14) jeweils separat gelagert sind wobei die zu einer Messerradeinheit (6) gehörenden Messerräder (5) mittels einer Verbindungshülse (16) aneinander drehfest befestigt sind und wobei die Verbindungshülse (16) die Achseinheit (14) wenigstens abschnittsweise koaxial umgibt und auf der Achseinheit (14) gelagert ist.

4. Anbaugerät (1) nach einem der vorhergehenden Ansprüche, wobei die Messerwalzenmodule (4) jeweils zentral und jeweils nur zwischen ihren Messerradeinheiten (6) an der Anbindungseinrichtung (12) befestigt sind.

5. Anbaugerät (1) nach einem der vorhergehenden Ansprüche, wobei zwischen benachbarten und zu unterschiedlichen Messerradeinheiten (6) desselben Messerwalzenmoduls (4) gehörenden Messerrädern (5) wenigstens ein Abstreifer (24) angeordnet ist und wobei der Abstreifer (121) durch die Anbindungseinrichtung (12) breitgestellt wird und/oder wobei zwischen benachbarten und zu einer gemeinsamen Messerradeinheit (6) gehörenden Messerrädern (5) wenigstens ein Abstreifer (26) angeordnet ist und wobei der Abstreifer (26) an der Anbindungseinrichtung (12) befestigt ist.

6. Anbaugerät (1) nach einem der vorhergehenden Ansprüche, wobei die zu einer gemeinsamen Messerradeinheit (6) gehörenden Messerräder (5) in Umfangsrichtung verdreht zueinander angeordnet sind, dass die Messer (7) des einen Messerrads (5) mittig zwischen den Messern (7) des benachbarten Messerrads (5) ausgerichtet sind.

7. Anbaugerät (1) nach einem der vorhergehenden Ansprüche, wobei die Drehachsen (15) der Messerräder (5) der Messerwalzenmodule (4) jeweils einer Messerwalzenreihe (3) in einem gleichen Anstellwinkel (35) mit gleicher Drehrichtung zur Arbeitsrichtung (20) schräg gestellt sind und wobei für wenigstens eine der Messerwalzenreihen (3) der Anstellwinkel (35) mit einer Linksdrehung und für wenigstens eine andere der Messerwalzenreihen (3) der Anstellwinkel (35) mit einer Rechtsdrehung vorgesehen ist und/oder wobei die Drehachsen (15) der Messerräder (5) der Messerwalzenmodule (4) jeweils einer Messerwalzenreihe (3) parallel zueinander ausgerichtet sind.

8. Anbaugerät (1) nach einem der vorhergehenden Ansprüche, wobei eine maximale axiale Breite (37) der Messer (7) maximal das Dreifache eines minimalen Abstands (47) zweier in axialer Richtung benachbarter Messer (7).

9. Anbaugerät (1) nach dem vorhergehenden Anspruch, wobei die maximale axiale Breite (37) der Messer (7) maximal 120 mm beträgt und/oder wobei ein minimaler Abstand (47) zweier in axialer Richtung benachbarter Messer (7) zwischen 25 mm und 60 mm beträgt.

10. Anbaugerät (1) nach einem der vorhergehenden Ansprüche, wobei die Messerwalzenreihen (3) mit einem definierten axialen Versatz (13) zueinander an dem Traggestell (2) angeordnet sind und wobei der Versatz (13) wenigstens einem Viertel einer maximalen axialen Breite (37) der Messer (7) entspricht.

11. Anbaugerät (1) nach einem der vorhergehenden Ansprüche, wobei die Schneidvorrichtung (10) mittels der Messer (7) auch zur Bodenbearbeitung geeignet und ausgebildet ist und wobei dazu die Messer (7) mit einem definierten Überstand (57) an den Tragscheiben nach radial außen hervorstehen, so dass die Messer (7) wenigstens mit dem Überstand (57) in den Boden eingreifen können.

12. Anbaugerät (1) nach einem der vorhergehenden Ansprüche, wobei die Messer (7) jeweils wenigstens eine Verstärkungsrippe (67) aufweisen.

13. Anbaugerät (1) nach einem der vorhergehenden Ansprüche, umfassend wenigstens eine an dem Traggestell (2) befestigbare Ballastierung (8) zum Eindrücken der Schneidvorrichtung (10) in den Boden, wobei die Ballastierung (8) wenigstens oberhalb der Messerwalzenreihen (3) angeordnet ist.

14. Anbaugerät (1) nach einem der vorhergehenden Ansprüche, wobei die Anbindungseinrichtungen (12) schräg und/oder gebogen von den Messerwalzenreihen (3) zum Traggestell (2) verlaufen und wobei die Anbindungseinrichtungen (12) der wenigstens einen Messerwalzenreihe (3) gegenläufig zu den Anbindungseinrichtungen (12) der wenigstens einen anderen Messerwalzenreihe (3) verlaufen.

15. Anbaugerät (1) nach einem der vorhergehenden Ansprüche, umfassend wenigstens eine an dem Traggestell (2) befestigte und in Arbeitsrichtung (20) vor der Schneidvorrichtung (10) angeordnete Vorbehandlungseinheit (9) zum Andrücken des Pflanzenmaterials auf den Boden.

## Claims

1. An attachment (1) for agricultural use in chopping plant material, including a support structure (2) and a cutting device (10) having at least two knife roller rows (3) arranged one behind the other on the support structure (2), wherein the knife roller rows (3) each comprise knife roller modules (4) with rotatable knife wheels (5) with knives (7) each with at least one blade (17) and wherein the knife wheels (5) each comprise at least one support disc (25), on which the knives (7) are arranged in such a manner that they at least partially protrude over the support disc (25) on at least one axial side and wherein the knife roller modules (4) each include at least one connecting device (12) for connecting to the support structure (2), wherein the axes of rotation (15) of the knife wheels (5) stand obliquely to a working direction (20) of the attachment (1),
**characterised**
**in that** the knife roller modules (4) each comprise at least two knife wheel units (6) which are rotatable about a common axis of rotation (15) independently of one another and in that the knife wheel units (6) each comprise at least two knife wheels (5) that are non-rotatably coupled to one another and in that the blades (17) are oriented parallel to the axis of rotation (15) of at least its knife wheel (5).

2. The attachment (1) according to the preceding claim,
wherein the knives (7) are arranged on the support disc (25) in such a manner that the blade (17) protrudes from the support disc (25) on both axial sides.

3. The attachment (1) according to one of the preceding claims,
wherein the knife wheel units (6) belonging to a knife roller module (4) are each separately mounted on a common axle unit (14) and wherein the knife wheels (5) belonging to a knife wheel unit (6) are non-rotatably attached to one another by means of a connecting sleeve (16) and wherein the connecting sleeve (16) coaxially surrounds the axle unit (14) at least in sections and is mounted on the axle unit (14).

4. The attachment (1) according to any one of the preceding claims,
wherein the knife roller modules (4) are each centrally attached to the connecting device (12), and only between their knife wheel units (6).

5. The attachment (1) according to any one of the preceding claims,
wherein between adjacent knife wheels (5) belonging to different knife wheel units (6) of the same knife roller module (4) at least one stripper (24) is arranged and wherein the stripper (121) is provided by the connecting device (12) and/or wherein between adjacent knife wheels (5) belonging to a common knife wheel unit (6) at least one stripper (26) is arranged and wherein the stripper (26) is attached to the connecting device (12).

6. The attachment (1) according to any one of the preceding claims,
wherein the knife wheels (5) belonging to a common knife wheel unit (6) are arranged twisted relative to one another in the circumferential direction so that the knives (7) of the one knife wheel (5) are oriented centrally between the knives (7) of the adjacent knife wheel (5).

7. The attachment (1) according to any one of the preceding claims,
wherein the axes of rotation (15) of the knife wheels (5) of the knife roller modules (4) of a knife roller row (3) each are set obliquely at a same blade angle (35) with the same direction of rotation relative to the working direction (20) and wherein for at least one of the knife roller rows (3) the blade angle (35) is provided with a left-hand rotation and for at least one other of the knife roller rows (3) the blade angle (35) is provided with a right-hand rotation and/or wherein the axes of rotation (15) of the knife wheels (5) of the knife roller modules (4) of a knife roller row (3) each are oriented parallel to one another.

8. The attachment (1) according to any one of the preceding claims,
wherein a maximum axial width (37) of the knives (7) is maximally three times a minimum distance (47) of two knives (7) adjacent in the axial direction.

9. The attachment (1) according to the preceding claim,
wherein the maximum axial width (37) of the knives (7) is maximally 120 mm and/or wherein a minimum distance (47) of two knives (7) adjacent in the axial direction is between 25 mm and 60 mm.

10. The attachment (1) according to any one of the preceding claims,
wherein the knife roller rows (3) are arranged on the support structure (2) with a defined axial offset (13) relative to one another and wherein the offset (13) corresponds at least to a quarter of a maximum axial width (37) of the knives (7).

11. The attachment according to any one of the preceding claims,
wherein the cutting device (10) by means of the knives (7) is also suitable and designed for soil tillage and wherein for this purpose the knives (7) protrude over the support discs with a defined amount (57) radially to the outside so that the knives (7) can engage in the ground at least with the protrusion (57).

12. The attachment (1) according to any one of the preceding claims,
wherein the knives (7) each comprise at least one reinforcement rib (67).

13. The attachment (1) according to any one of the preceding claims,
including at least one ballast (8) that can be attached to the support structure (2) for pressing the cutting device (10) into the ground, wherein the ballast (8) is arranged at least above the knife roller rows (3).

14. The attachment (1) according to any one of the preceding claims,
wherein the connecting devices (12) extend obliquely and/or bent from the knife roller rows (3) to the support structure (2) and wherein the connecting devices (12) of the at least one knife roller row (3) extend opposite to the connecting devices (12) of the at least one other knife roller row (3).

15. The attachment (1) according to any one of the preceding claims,
including at least one pre-treatment unit (9) attached to the support structure (2) and arranged in the working direction (20) in front of the cutting device (10) for pressing the plant material onto the ground.

## Revendications

1. Équipement rapporté (1), destiné à une utilisation dans le domaine agricole, pour hacher des matières végétales, comprenant un châssis porteur (2) et un dispositif de coupe (10) pourvu d'au moins deux rangées (3) de cylindres porte-lames, placées l'une derrière l'autre sur le châssis porteur (2), les rangées (3) de cylindres porte-lames comportant chacune des modules (4) de cylindres porte-lames dotés de roues (5) porte-lames rotatives munies de lames (7), avec chaque fois au moins un tranchant (17) et les roues (5) porte-lames comportant chacune au moins un disque porteur (25), sur lequel les lames (7) sont placées de sorte à déborder au moins partiellement vers au moins une face axiale du disque porteur (25) et les modules (4) de cylindres porte-lames comprenant chacun au moins un système de raccordement (12), pour les raccorder sur le châssis porteur (2), les axes de rotation (15) des roues (5) porte-lames se trouvant en inclinaison par rapport à une direction de travail (20) de l'équipement rapporté (1),
**caractérisé**
**en ce que** les modules (4) de cylindres porte-lames comportent chacun au moins deux unités de roues (6) porte-lames rotatives indépendamment l'une de l'autre autour d'un axe de rotation (15) commun et **en ce que** les unités de roues (6) porte-lames comportent chacune au moins deux roues (5) porte-lames couplées l'une avec l'autre de manière solidaire en rotation et **en ce que** les tranchants (17) sont orientés à la parallèle de l'axe de rotation (15) d'au moins leur roue (5) porte-lames.

2. Équipement rapporté (1) selon la revendication précédente, les lames (7) étant placées sur le disque porteur (25), de telle sorte que le tranchant (17) déborde sur les deux faces axiales du disque porteur (25).

3. Équipement rapporté (1) selon l'une quelconque des revendications précédentes, les unités de roues (6) porte-lames appartenant à un module (4) de cylindres porte-lames étant logées chacune séparément sur une unité d'axe (14) commune, les roues (5) porte-lames appartenant à une unité (6) de roues porte-lames étant fixées l'une sur l'autre de manière solidaire en rotation au moyen d'une douille d'assemblage (16) et la douille d'assemblage (16) entourant au moins par endroits l'unité d'axe (14) de manière coaxiale et étant logée sur l'unité d'axe (14).

4. Équipement rapporté (1) selon l'une quelconque des revendications précédentes, les modules (4) de cylindres porte-lames étant fixés chacun de manière centrale et chacun uniquement entre leurs unités de roues (6) porte-lames sur le système de raccordement (12).

5. Équipement rapporté (1) selon l'une quelconque des revendications précédentes, entre des roues (5) porte-lames voisines et appartenant à différentes unités de roues (6) porte-lames du même module (4) de cylindres porte-lames étant placé au moins un racleur (24) et le racleur (121) étant mis à disposition par le système de raccordement (12) et / ou entre des roues (5) porte-lames voisines et appartenant à une unité (6) de roues porte-lames commune étant placé au moins un racleur (26) et le racleur (26) étant fixé sur le système de raccordement (12).

6. Équipement rapporté (1) selon l'une quelconque des revendications précédentes, les roues (5) porte-lames appartenant à une unité (6) de roues porte-lames commune étant placées en étant tournées les unes à l'égard des autres dans la direction circonférentielle, de sorte que les lames (7) de l'une roue (5) porte-lames soient orientées au centre entre les lames (7) de la roue (5) porte-lames voisines.

7. Équipement rapporté (1) selon l'une quelconque des revendications précédentes, les axes de rotation (15) des roues (5) porte-lames des modules (4) de cylindres porte-lames de chaque fois une rangée (3) de cylindres porte-lames étant placés en inclinaison sous un même angle d'attaque (35), dans un même sens de rotation par rapport à la direction de travail (20) et pour au moins l'une des rangées (3) de cylindres porte-lames, l'angle d'attaque (35) étant prévu avec une rotation vers la gauche et pour au moins une autre des rangées (3) de cylindres porte-lames, l'angle d'attaque (35) étant prévu avec une rotation vers la droite et/ ou les axes de rotation (15) des roues (5) porte-lames des modules (4) de cylindres porte-lames de chaque fois une rangée (3) de cylindres porte-lames étant orientés à la parallèle les uns des autres.

8. Équipement rapporté (1) selon l'une quelconque des revendications précédentes, une largeur axiale (37) maximale des lames (7) s'élevant au maximum au triple d'un écart minimal (47) entre deux lames (7) voisines dans la direction axiale.

9. Équipement rapporté (1) selon la revendication précédente, la largeur axiale (37) maximale des lames (7) s'élevant au maximum à 120 mm et / ou un écart minimal (47) entre deux lames (7) voisines dans la direction axiale s'élevant à entre 25 mm et 60 mm.

10. Équipement rapporté (1) selon l'une quelconque des revendications précédentes, les rangées (3) de cylindres porte-lames étant placées avec un décalage (13) axial défini les unes par rapport aux autres sur le châssis porteur (2) et le décalage (13) correspondant au moins à un quart d'une largeur axiale (37) maximale des lames (7).

11. Équipement rapporté (1) selon l'une quelconque des revendications précédentes, le dispositif de coupe (10) étant adapté et conçu également pour le travail du sol au moyen des lames (7) et à cet effet, les lames (7) débordant en direction radiale vers l'extérieur sur les disques porteurs avec un surplomb (57) défini, de telle sorte que les lames (7) puissent s'engager dans le sol de la valeur d'au moins le surplomb (57).

12. Équipement rapporté (1) selon l'une quelconque des revendications précédentes, les lames (7) comportant chacune une nervure de renfort (67).

13. Équipement rapporté (1) selon l'une quelconque des revendications précédentes, comprenant au moins un lestage (8) susceptible d'être fixé sur le châssis porteur (2), destiné à enfoncer le dispositif de coupe (10) dans le sol, le lestage (8) étant placé au moins au-dessus des rangées (3) de cylindres porte-lames.

14. Équipement rapporté (1) selon l'une quelconque des revendications précédentes, les systèmes de raccordement (12) s'écoulant en inclinaison et / ou sous forme recourbée, des rangées (3) de cylindres porte-lames vers le châssis porteur (2) et les systèmes de raccordement (12) de l'au moins une rangée (3) de cylindres porte-lames s'écoulant à contresens des systèmes de raccordement (12) de l'au moins une autre rangée (3) de cylindres porte-lames.

15. Équipement rapporté (1) selon l'une quelconque des revendications précédentes, comprenant au moins une unité de prétraitement (9) fixée sur le châssis porteur (2) et placée à l'avant du dispositif de coupe (10) dans la direction de travail (20), pour presser la matière végétale sur le sol.
